# EUROPEAN PATENT SPECIFICATION

(11) **EP 4 563 967 B1**
(45) Date of publication and mention of the grant of the patent: **05.08.2026**
(21) Application number: 24211636.6
(22) Date of filing: 08.11.2024
(51) Int. Cl.: G01N 1/24, G01N 1/22, G01N 15/02, G01N 15/06, B64D 45/00, B64F 5/60, G01M 15/14, G01N 15/00, G01N 1/02

(54) **A GAS TURBINE ENGINE COMPONENT PARTICULATE SAMPLING APPARATUS, SYSTEM AND METHOD**
PARTIKELENTNAHMEVORRICHTUNG, -SYSTEM UND -VERFAHREN FÜR GASTURBINENMOTORKOMPONENTEN
APPAREIL, SYSTÈME ET PROCÉDÉ D'ÉCHANTILLONNAGE DE PARTICULES DE COMPOSANT DE MOTEUR À TURBINE À GAZ

(30) Priority: 01.12.2023 GB 202318388
(43) Date of publication of application: 04.06.2025
(73) Proprietor: Rolls-Royce plc, London N1 9FX (GB)
(72) Inventor: Mullaney, Alex D, Derby, DE24 8BJ (GB); Ndamka, Ngunjoh L, Derby, DE24 8BJ (GB); Jones, Merren A, Derby, DE24 8BJ (GB); Covey-Crump, Stephen J, Derby, DE24 8BJ (GB); Bojdo, Nicholas M, Derby, DE24 8BJ (GB); Pawley, Alison R, Derby, DE24 8BJ (GB); Clarkson, Rory J, Derby, DE24 8BJ (GB); Geis, Torsten, Derby, DE24 8BJ (GB)
(74) Representative: Rolls-Royce plc

(56) References cited:
- US-A1- 2005 183 575
- US-A1- 2012 152 038
- US-A1- 2017 115 197

## Description

### FIELD OF THE DISCLOSURE

The present disclosure concerns a system and method for collecting particulate matter that has built up upon a surface of a gas turbine engine component.

### BACKGROUND

Gas turbine engines, as used for propulsion or power generation purposes must operate in a range of different atmospheric conditions. The atmospheric conditions may comprise a variety of airborne contaminants, in gaseous, liquid and solid form and in different concentrations.

It is known that solid contaminants can adhere to air washed surfaces of the gas turbine engine and known that the build-up of these contaminants can lead to both a degradation in the efficiency of the engine, and the life of engine components. In worst cases, this can lead to the premature removal of the engine from its installation for refurbishment.

It is also known that the rate of degradation of engine efficiency can be at least partially mitigated by the application of surface coatings to affected components, or component redesign. However, coatings and / or component redesign are expensive options, meaning that it is desirable to only pursue these options in areas of the gas turbine engine that are most susceptible to performance degradation.

There therefore exists a desire for an apparatus, such that samples of particulate matter coating a surface of a gas turbine engine component may be obtained and for a method for obtaining these samples.

US 2017115197 A1 discloses a method and apparatus for measuring aerosol particles suspended in a gas, such as a flue gas. The particles are drawn through a filter housing and are collected on a filter.

US 2012152038 A1 discloses a vacuum driven sampling device, in which material is captured on a filter for subsequent analysis. The device is suitable for sampling material from air or sea cargo.

US 2005183575 A1 discloses an adapter for a low volume air sampler. A vacuum depression is used to draw a sample of air over a polyurethane foam cartridge, such that contaminants in the air are collected on a cartridge. A sampling tube may be connected to the sampler such that the air sampling point is remote from the cartridge. The sampler is configured for use in the interior cabin of a passenger carrying jet aircraft.

### SUMMARY

According to a first aspect there is provided a gas turbine engine component surface particulate sampling system as claimed in claim 1.

According to a second aspect there is provided a method of determining the composition of particulate residue on a surface of a gas turbine engine component, as claimed in claim 8. The method comprises obtaining a particulate sample from a surface of the gas turbine engine component using the system of the first aspect.

The term "characteristic particle size" as used herein means an idealised, spherical particle having a diameter (a characteristic dimension) which results in a volume equal to that of an actual particle which is not spherical but is to some degree elongate (having one dimensions greater than another) and/or has an undulating surface profile.

Similarly, the term "characteristic pore size" may be used with respect to a collection media, to recognise that voids (pores) within the collection media may not be spherical but may have unequal dimensions and/or an undulating internal surface.

The term "principal axis" is defined within the scope of this document as an axis about which an object is axi-symmetric.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

### BRIEF DESCRIPTION OF THE DRAWINGS

Embodiments will now be described by way of example only, with reference to the FIGS., in which:
**FIG. 1** is a sectional side view of a gas turbine engine;
**FIG. 2** is a schematic illustration of a first example of a particulate sample collector;
**FIG. 3a** is a schematic illustration of a second example of a particulate sample collector;
**FIG. 3b** is a view along line A-A of FIG. 3a;
**FIG. 4** is an example of a system comprising an example particulate sample collector;
**FIG. 5a** is a schematic illustration of a nozzle and flexible conduit, coupled to a particulate sample collector;
**FIG. 5b** is a view along line B-B of FIG. 4a; and
**FIG. 6** is an example method for use with the particulate sample collector.

### DETAILED DESCRIPTION

Aspects and embodiments of the present disclosure will now be discussed with reference to the accompanying FIGS. Further aspects and embodiments will be apparent to those skilled in the art.

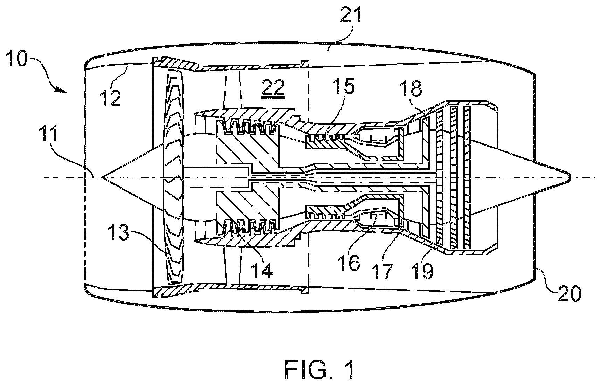

With reference to FIG. 1, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow (a core air flow) into the intermediate pressure compressor 14 and a second air flow (a bypass flow) which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

As a gas turbine engine is an air breathing engine, the components of the gas turbine engine are exposed to pollutants present within the atmosphere, with these pollutants having a potentially deleterious effect on these components.

The pollutants may comprise aerosolised minerals and / or volcanic ash.

Aerosolised minerals may also be referred to as mineral dust. The aerosolised minerals comprise tiny (typically less than 100 microns in diameter) particles of fragmented rock that are airborne due to wind action. The aerosolised particles are typically crystalline in nature.

Volcanic ash comprises similarly-sized particles to aerosolised minerals (typically less than 100 microns in diameter), that are also airborne. The volcanic ash originates from volcanic eruptions, during which molten rock rapidly solidifies in a vent of a volcano or the atmosphere to form particles comprising amorphous glassy solids. The particles of volcanic ash may additionally comprise some solid crystal fragments present in the rock during the volcanic eruption. Volcanic ash may have a glass content between 20%-100%.

The pollutants may form deposits, for example, as particulate matter on surfaces of components of the gas turbine engine. The particulate matter may be referred to as dust.

The particulate matter may comprise a range of different particle sizes.

A characteristic particle size of at least a subset of the particulate matter may be at least 0.2 microns, the subset of particulate matter corresponding to a sample of the particulate matter (a particulate sample) that is to be taken.

The magnitude of the deleterious effect that may occur is based upon a number of factors, including the chemical and physical properties of the pollutant, the temperature of the component in contact with these pollutants, the material from which the component (or coating on the component) is made, and the concentration of these pollutants within the gas turbine engine.

For example, as the core of the gas turbine engine receiving the core air flow operates at a significantly higher peak temperature than the bypass duct, the core engine components of the gas turbine engine have a greater propensity to deteriorate due to contamination than the bypass duct components.

As the core of the gas turbine engine comprises turbomachinery rotating at high rotational speeds, strong centrifugal forces are generated within the second air flow of the gas turbine engine when it is operated, meaning that the size distribution of airborne particulate entering an inlet to the intermediate pressure compressor may be alter as a function of radial duct height as the airborne particles progress through the intermediate compressor, and potentially, the downstream high pressure compressor. For example, larger particles are more likely to be centrifuged radially outboard than smaller particles, as they pass through the compressors of the gas turbine engine.

Smaller particles that are more easily carried by the airflow may be extracted from the main gas path of the core gas turbine engine, by radially inboard offtakes used to supply air to the secondary air system of the gas turbine engine, for example, for engine cooling, bearing sealing or bearing load management.

However, wherever contact is made between the pollutants and a surface of an air washed portion of a gas turbine engine component, a residue of the pollutant may be left upon that surface. The air washed portion of a gas turbine engine component may be in the primary gas path of the gas turbine engine (for example on an aerodynamic surface of a blade of propulsive fan 13, compressor 14, 15 or turbine 17, 18,19) or may be on a surface exposed to a flow that has been extracted as an offtake from the primary gas path (for example, the air washed portion of the gas turbine engine component may form part of an air system of the gas turbine engine).

From the above discussion, it will be appreciated that the nature of the residue (i.e. its chemical composition and/or distribution of particle sizes) may vary within different portions of the gas turbine engine.

It will be appreciated from the above disclosure that benefit may be derived from mapping which areas of the gas turbine engine collect what forms of particulate. This is because, using this knowledge, the gas turbine engine manufacturer may selectively apply protective coatings to the affected gas turbine engine components. Different surface coatings may be applied to different components, depending upon the type and concentration of residue (particulate) build up that may occur upon them in use.

By selectively applying coatings, the gas turbine engine manufacturer may therefore be able to reduce the cost of engine components and/or simplify the manufacturing processes and /or supply chain for procuring gas turbine engine components.

The present disclosure relates to how a sample of this particulate matter (a particulate sample) may be collected from a gas turbine engine, and the subsequent analysis of this particulate.

The sample may be collected when the engine is not operating, i.e., when the gas turbine is switched off and turbomachinery components of the gas turbine engine are not rotating.

The sample may be collected whilst the engine is assembled.

For example, the sample may be collected from a surface of a gas turbine component that is readily accessible to a user when the engine is not operating.

Examples of such components include the spinner of the gas turbine engine, a fan blade of the gas turbine engine or an air-washed panel within the bypass-duct of the gas turbine engine.

The sample may be collected whilst the engine is assembled by removal of a borescope port from a casing of the gas turbine engine. In this way, a sample may, for example, be taken from the surface of a compressor rotor blade, a compressor stator vane, a turbine rotor blade, a turbine stator vane, an offtake within the intermediate pressure compressor, or within a high pressure compressor, a bleed valve port etcetera.

Alternatively, the sample may be obtained when the gas turbine engine is disassembled.

For example, the gas turbine engine may be a pre-production prototype that has been stripped down to its component parts, or may be a production engine, returning from service with an airline that has been stripped down to its component parts. Examining components form a stripped (disassembled) engine may be desirable because access is possible to portions of a component of the gas turbine engine that may not be readily accessible by borescope inspection. For example, access may be possible to all portions of components which comprise the gas turbine engine's secondary air system.

The particulate sample is obtained via a particulate sample collector 30. The particulate sample collector 30 collects a particulate sample 81 from the particulate matter that has been deposited on a surface of a gas turbine engine component.

Particulate sample collector 30 may be referred to as a gas turbine engine component particulate sample collector 30, or for brevity within this document, may be referred to as a collector 30.

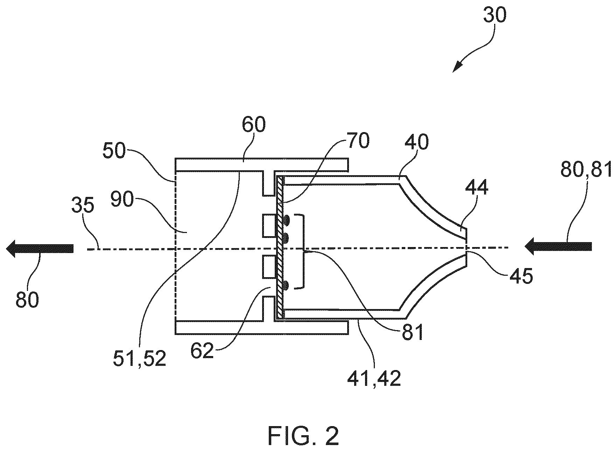

Various forms of particulate sample collector 30 for collecting a particulate sample deposited on a surface of a gas turbine engine component are envisaged, with a first example illustrated in **FIG. 2****.**

The particulate sample collector 30 of FIG. 2 comprises a hollow body 40, the hollow body comprising an inlet 45.

The hollow body may be axi-symmetric about a principal axis 35 (as illustrated in FIG. 2). Alternatively, the hollow-body may have any suitable cross-section. For example, the hollow-body may have a polygonal cross-sectional area, such as rectangular or square cross-section.

The hollow body 40 may additionally comprise a nozzle 44 (as shown in FIG. 2).

If the hollow body 40 comprises a nozzle 44, the inlet 45 is at the tip of the nozzle 41.

In the nozzle, a continuous (i.e., not discrete) and gradual increase in cross sectional area occurs, from the inlet 45, at which the cross sectional area of the hollow body is smallest.

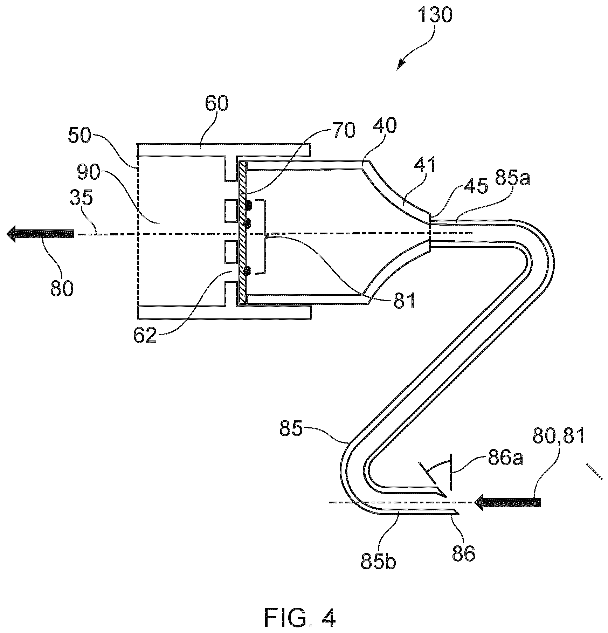

If the hollow body does not comprise a nozzle 44, there may be a discontinuous change, such as a step change, in cross-sectional area between the inlet 45 and a cross-sectional area of the hollow body. An example of such a step change is illustrated in FIG. 4.

The particulate sample collector 30 additionally comprises an exit 50 that is fluidically coupled to the inlet 45.

In the example of FIG. 2, the exit 50 does not form part of the hollow body 40 but is instead part of a collection media support 60 that interfaces with the hollow body 40.

A first interface 42 may be provided between the hollow body 40 and the collection media support 60. A first seal 41 may be provided at the first interface 42.

The first interface 42 may comprise an interference-fit between hollow body 40 and the collection media support 60, to form the first seal 41. Alternatively, the first seal 41 may comprise other sealing means, such as a push-fit or at least one O-ring seal.

The inlet 45 and exit 50 are fluidically coupled, meaning that a fluid, for example air, may flow into the particulate sample collector 30 at inlet 45, before subsequently flowing out to the particulate sample collector 30 at exit 50.

As explained in more detail below, a flow of air (an airflow) through the particulate sample collector 30 from inlet 45 to exit 50 may be generated by the provision of a vacuum source 90 at exit 50.

A second interface 52 may be provided between the exit 50 of the particulate sample collector 30 and the vacuum source 90. A second seal 51 may be provided at the second interface 52.

The second seal 51 may be similar in structure to the first seal 41. For example, the second seal 51 may comprise at least one O-ring seal.

The vacuum source 90 used may be any suitable vacuum source. For example, the vacuum source 90 may be provided by a conventional domestic or industrial vacuum cleaner.

The exit 50 may have an internal diameter that corresponds to the diameter of the inlet tubing to the vacuum cleaner, for example, approximately 32mm.

The vacuum cleaner may be powered by an internal battery such that it is portable and may be easily transported to a site at which a sample is to be collected. This may be advantageous if the sample is to be taken in-situ, if the gas turbine engine is assembled and fitted to an aircraft.

The collection media support 60 is configured to support a collection media 70. In use, a particulate sample 81 is collected on or in the collection media 70.

In the example of FIG. 2, the collection media support 60 is engageable with and slidable relative to the hollow body 40, such that when it is engaged with the hollow body 40, the collection media 70 is supported by the collection media support and is between the inlet 45 and exit 50.

In some embodiments, for example, as illustrated in FIG. 2, the collection media may be held between facing surfaces of the collection media support and the hollow body. For example, the collection media may be clamped at its periphery between a portion of the collection media support 60 and the hollow body 40.

In other embodiments, securing features (not shown) may be provided on the collection media support 60 to hold the collection media 70 in position. An example of these securing features includes at least one pocket, protruding from a surface of the collection media support 60, into which a peripheral portion of the collection media 70 may be tucked.

As the collection media support 60 is movable (for example; slidable) relative to the hollow body 40, the collection media support 60 and hollow body 40 may be separated such that a support surface 61 of the collection media support is accessible to permit collection media 70 to be provided upon the support surface 61 of the collection media support, before reassembly of the support 60 and hollow body 40.

Different forms of support surface 61 are envisaged.

For example, in some embodiments, the support surface occupies a cross-section of the collection media such that it extends across a void within the hollow body 40, separating inlet 45 and exit 50.

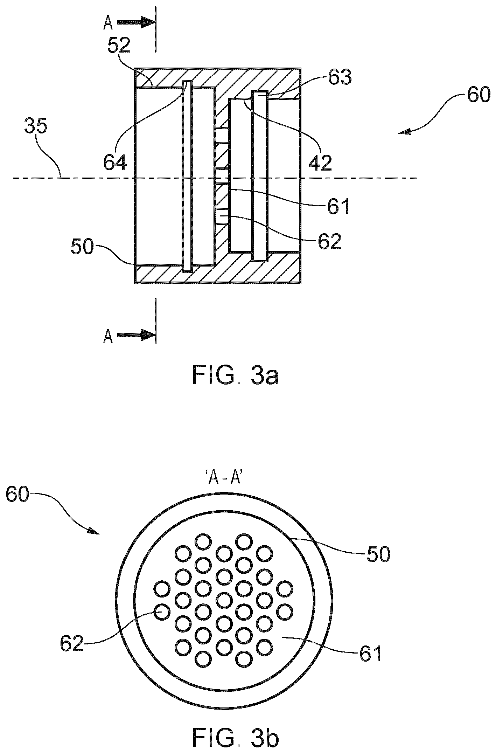

In these embodiments, as the inlet 45 and exit 50 are fluidically coupled, the support surface 61 of the collection media support 60 is either porous or perforated, such that a fluid may flow through the support surface when travelling from the inlet 45 to exit 50. An example of this form of support surface 61 is shown in **FIG. 3**, which illustrates how the support surface 61 is perforated, comprising a plurality of through holes 62. Any suitable pattern of through holes 62 may be used.

Other orientations of the support surface 61 are also envisaged (not shown).

For example, the support surface 61, and consequently, the collection media 70 disposed on the support surface 61, may be inclined at an angle to the fluid flow within the collector 30, or may even be aligned with the fluid flow from inlet 45 to exit 50.

Aligning the collection media with the flow direction may be advantageous, because it permits the collection media to extend in the direction of the fluid flow. This means that the area of collection media may be increased without a proportionate increase in the cross-sectional area of the particulate sample collector 30.

Similarly, in some embodiments, the support surface 61 may not be planar, but may have a corrugated or castellated profile (i.e., a non-planar profile of surface). A collection media, disposed upon the non-planar support surface may therefore also adopt a similar profile. This permits the surface area of the collection media 70 to be increased, without a proportionate increase in the cross-sectional area of the particulate sample collector 30.

The various ways of increasing the surface area of the collection media 70 without a proportionate increase in the cross-sectional area of the sample collector is advantageous in situations in which a compact collector 30 is desirable. For example, in a situation in which the collector is to pass through a borescope port of an engine casing, to enable a sample to be taken from a surface of an engine component within an assembled engine, or where the geometry of the component is such that a smaller diameter collector is preferable.

The collection media may be of any suitable material. For example, the collection media may comprise cellulose (for example, as a paper), polyvinylidene difluoride (PVDF), polytetrafluoroethylene (PTFE), polyvinyl chloride (PVC), polypropylene, quartz or a polyamide such as nylon.

The collection media is porous, permitting airflow 80 to pass through it. The collection media has a pore size suitable for collecting the particulate sample 81 that is of interest for analysis.

To ensure capture of a suitable sample volume whilst maintaining an adequate airflow at inlet 45, the collection media 70 may have a pore size less than 2 microns. Preferably, the collection media 70 has a pore size of approximately 0.2 microns.

In this way the collection media 70 may collect particles having a characteristic particle size that is greater than the pore size of the collection media 70.

It will be appreciated that different engine components may be more or less sensitive to deterioration than others. Consequently, different collection media, having different pore sizes, may be selected when sampling different components of the gas turbine engine.

Alternatively or additionally, the collection media may comprise a plurality of different layers, the different layers having different pore sizes. The different layers may be separable from each other, such that particles of different characteristic particle size, which have collected on the different layers, may be extracted from the collection media for analysis. If the collection media comprises different pore sizes, the pore size of successive layers may decrease as the particulate matter passes through the media - i.e. the upstream layers have a larger pore size than the downstream layers. This may be beneficial as this arrangement of layers sub-divides the particulate matter into different size ranges, during collection of the particulate sample.

Further refinements are also envisaged.

For example, although the movable nature of the hollow body 40 relative to the collection media support provides a straightforward way of replacing the collection media 70, it may be desirable to form a first seal 41 between the hollow body 40 and the collection media support 60, at the first interface 42.

The first seal 41 may be partial, in that some leakage past the first seal is acceptable, if for example, the resulting clearances between adjacent surfaces permit movement between the hollow body and the collection media support.

Forming at least a partial seal at the first interface 42 between the hollow body 40 and the collection media support 60 may be desirable, because this reduces the total effective area (the sum of leakage area and inlet area) through which air and particulate matter is drawn into the particulate sample collector 30, and in the limiting case, ensures that air and particulate is only drawn into particulate sample collector 30 via the inlet 45.

For a given intensity of vacuum source, this increases the velocity of air entering the inlet 45, and consequently, increases the intensity of the suction available to entrain solid particulate that have accumulated on a surface of a gas turbine component.

This may be particularly advantageous in circumstances in which a relatively low level of particulate matter has built up and / or the particulate has adhered to the surface of the gas turbine components and/or the topology of surface of the gas turbine component comprising the particulate to be sampled, is such that the inlet 45 may not be placed close to the surface

Various ways of forming at least a partial first seal 41 are envisaged, either singly or in combination, as appropriate.

For example, the facing surfaces of the hollow body 40 and collection media support 60 may be an interference-fit. However, this may have the disadvantage that it hinders movement between the hollow body 40 and the collection media support 60, hindering the ease with which the collection media 70 may be replaced.

Alternatively, the facing surfaces of the hollow body 40 and collection media support 60 may be a push-fit.

Alternatively, the collection media 70 may have an outer characteristic dimension that is greater than an internal dimension of the collection media support and / or the hollow body. In this way, a peripheral portion of the collection media may be held (clamped) between the collection media support 60 and the hollow body 40 (see FIG. 2). A compressive force, holding the collection media in place, may be generated by the provision of a vacuum source to the exit 50, as the resulting reduction in air pressure within the hollow body 40 causes the axially-facing surfaces of the hollow body 40 and collection media support 60 to be pressed together.

Alternatively or additionally, the hollow body 40 may comprise a male screw thread, aligned along principal axis 35 while the collection media support 60 may comprise a corresponding female screw thread, aligned align the same axis, or vice versa. Tightening the male thread relative to the female thread permits the hollow body 40 and collection media support 60 to be held together, forming the first seal 41.

Alternatively or additionally, an elastomeric seal may also be provided between the radially facing surfaces of the hollow body and the collection media support 60 to form the first seal 41. This is illustrated in FIG. 3a, in which a first groove 63 is provided on the facing surface of the collection media support 60 at the first interface 42, the first groove locating an elastomeric O-ring seal (not shown). Although in FIG. 3a the first groove 63 is in the facing surface of the collection media support, it will be readily appreciated that the first groove 63 may alternatively be in the facing surface of the hollow body.

FIG. 3a also illustrates that a second groove 64 may be provided at the second interface 52 between the exit 50 of the particulate sample collector 30 and the vacuum source. The second groove 64 houses an elastomeric O-ring seal (not shown), forming a second seal 51 and reducing leakage at the second interface 52.

Alternatively, the second interface 52 may comprise an interference-fit, a push-fit, a screw thread etc, to form these second seal, in a similar manner to the formation of the previously disclosed first seal.

The velocity of the air velocity at inlet to the collector 30 may also be increased by reducing the cross-sectional area of the inlet 45 relative to the cross sectional area of the exit 50, in which exit 50 interfaces with the vacuum source. The particulate sample collector 30 is therefore connectable to the vacuum source via exit 50.

The velocity of air at inlet 45 when a suitable vacuum source is provided at exit 50 may be at least 0.1 meters/ second.

Preferentially, the velocity of air at inlet 45 may be at least 0.8 m/s.

FIG. 4 shows a tube 85 is connected to the inlet 45. The tube is part of a borescope, with the combination of the particulate sample collector 30 and borescope tube 85 forming a system 130 for collecting a particulate sample.

The tube 85 is hollow.

The tube may have a substantially constant cross-sectional area along its length, between its first end 85a and its second end 85b.

The tube 85 extends the reach of the collector 30, as it enables suction to be applied to a gas turbine engine component that would otherwise not be possible by the collector inlet 45 alone.

The tube 85 has a first end 85a, and a second end 85b opposing the first end 85a.

The tube 85b is connected at its first end 85a to the inlet 45.

The second end 85b of the tube 85 is used for obtaining a particulate sample 81 from a surface of a gas turbine engine. The second end 85b of the tube 85 may comprise a second nozzle 86 or may be connectable to a second nozzle 86.

The second nozzle 86 has a cross-sectional area that is lower than the cross-sectional area of the tube 85. This may be beneficial because, for a given vacuum source 90, it increases the airflow velocity and hence particle sample entrainment, relative to a scenario in which the second nozzle 86 is not present.

The second nozzle 86 may comprise a scraper surface; the tip of the second nozzle may be inclined at an angle 86a (for example, between 30° and 60°) to a principal axis of the second nozzle 86 or second end 85b of the tube 85; an airflow velocity at inlet to the second nozzle may be at least 0.1 meters /second etc.

The tube may be rigid or flexible.

The length of the tube, the external diameter of the tube and / or the stiffness of the tube may be selected based upon the location and localised topology of the portion of the gas turbine component from which the particulate sample 81 is to be collected, as the location and localised topology determine the ease of access to take the particulate sample.

A rigid tube 85 may be desirable where there is a line of sight between the collector 30 and the portion of the gas turbine engine component from which the particulate sample 81 is to be obtained, as the rigid tube may transmit a force applied by a user. For example, a rigid tube 85 may enable particulate matter to be scraped from the surface of the gas turbine engine component.

A flexible tube 85 may be desirable if a sample is to be obtained by borescoping an assembled engine. The flexible hollow extension may be configured to be attached to a borescope or may form part of a borescope. In this way, a user may observe the surface of the gas turbine component, and particulate build up, whilst obtaining a sample of the particulate.

Optionally, this system may additionally comprise a second nozzle (as illustrated in FIG. 4) for improved particulate sample collection.

The collector 30 may optionally be formed by an additive manufacturing process such as stereolithography.

This may be desirable, because in some circumstances, the desire to take a particulate sample may arise at short notice, and a collector 30 may not available. This situation may arise when an aircraft is received by an airline's engineering team for routine maintenance, and a deposit is observed on a surface of a gas turbine engine component, as part of the team's routine maintenance checks.

The above optional features may be applied either singly or in combination, with a collector 30 as illustrated in FIG. 2, or system 130, as illustrated in FIG. 4.

The above optional features may also be applied either singly or in combination with different example structures of the collector 30 andsystem 130, which also fall within the scope of the invention.

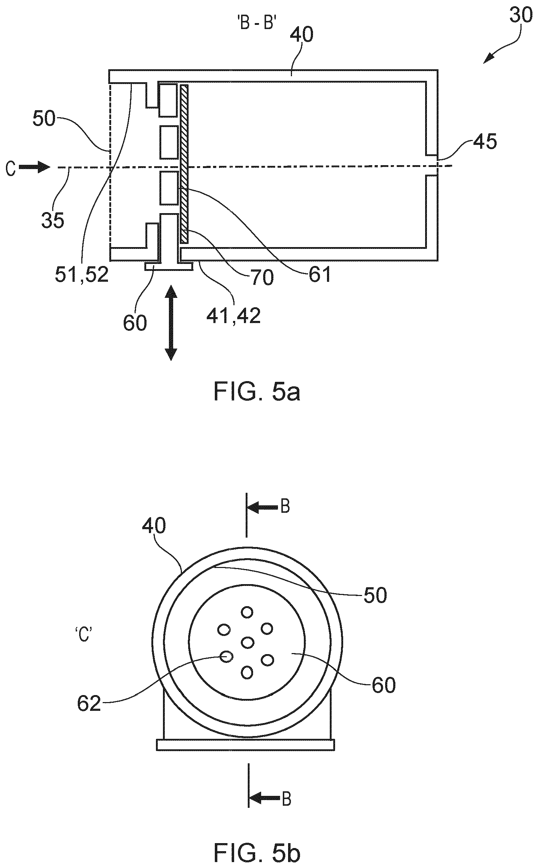

An example of a different structure of the collector 30 is illustrated in **FIGS. 5a and 5b****.** This different structure of collector 30 may also form part of system 130.

Like FIGS. 2, 3a and 3b, the particulate sample collector 30 of FIGS. 5a and 5b comprises a hollow body 40 that has an inlet 45.

Like FIG. 2, the particulate sample collector 30 additionally comprises an exit 50 that is fluidically coupled to the inlet 45, with a collection media 70 supported on a support surface 61 of collection media support 60 between the inlet 45 and exit 50. Like in FIG. 2, the collection media support 60 is movable (slidable) relative to, and engageable with the hollow body 40.

Like the example of FIG. 2, at least one first seal 41 may be provided at the first interface 42 between the hollow body 40 and the collection media support 60.

However, unlike FIG. 2, the collection media support 60 does not slide (move) along principal axis 35 of the collector (and hollow body 40), but rather, slides at an angle that is inclined to principal axis 35. In the example of FIG. 4, the collection media support 60 slides at an angle that is approximately orthogonal to principal axis 35.

In the example of FIGS. 5a and 5b, the collection media 70 is therefore side-loaded into the particulate sample collector 30, in a manner like that of loading a photographic slide into a slide projector. Hence, rather than being substantially three-dimensional, the collection media support 60 of FIGS. 5a and 5b, may be substantially two-dimensional (planar), as it supports a substantially planar collector media 70.

It will be appreciated that collection media support 60 may additionally comprise securing features (not shown) to secure the collection media 70 as it is loaded into the collector 30.

Further points of difference between the example of FIGS. 5a and 5b and the example of FIG. 2, which fall within the scope of the invention include that in FIGS. 5a and 5b, exit 50 is not comprised within the particulate sample collector 60, but is instead, comprised within hollow body 40, while inlet 45 is not comprised within a continuously expanding nozzle 41, but rather, there is a step change in cross-sectional area between inlet 45 and the cross-sectional area of the hollow body 40.

The second example collector 30 of FIGS. 5a and 5b therefore illustrates an alternative structural arrangement to achieve substantially the same functional performance as the first example of FIG. 2.

Other example structures may be readily devised, which also fall within the scope of the disclosure now made. For example, although the above disclosure relates to a collector which is user-separable to enable the collection medium 70 to be replaced, the collector 30 may be provided as a non-user serviceable item (i.e., as a cartridge), in which the collection medium 70 is only removed immediately prior to analysing the sample. It will be appreciated that in this example, it may be desirable for the first interface 42 between the hollow body 40 and the collection media support 60 to be an interference fit, as this eases assembly of the cartridge.

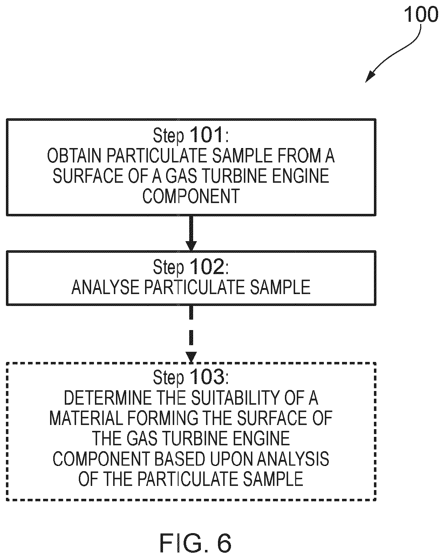

**FIG.** 6 illustrates a method 100 of determining the composition (physical and/or chemical composition) of a particulate residue on a surface of a gas turbine engine component obtaining a particulate sample using the collector 30 or system 130, as previously disclosed.

The method 100 comprises two steps 101 and 102 and an optional third step 103. The first step 101 involves obtaining, via suction, a particulate sample 81 from a surface of a gas turbine engine component. The second step 102 involves analysing the particulate sample 81. The optional third step 103 involves determining the suitability of a material forming the surface of the gas turbine engine component based upon analysis of the particulate sample.

In step 101, a vacuum source 90 such as a conventional vacuum cleaner is attached at exit 50 of the particulate sample collector 30.

The airflow 80 generated by the provision of the vacuum source entrains a particulate sample 81, drawing the particulate sample 81 through the particulate sample collector 30 such that the particulate sample 81 is collected by the collection media 70 and the airflow 80 exits the particulate sample collector 30 at the exit 50.

It will be appreciated that depending upon the characteristic pore size of the collection media 70, and the range of characteristic particle sizes entrained in airflow 80, in some circumstances the airflow 80 exiting the exit 50 may still comprise particulate matter that has a smaller characteristic particle size than the characteristic pore size of the collection media, as this material may pass through the collection media 70.

Although finer particle sizes may be collected by changing the collection media 70 for a media having a smaller characteristic pore size, this may have the disadvantage that the collection media is prone to clogging (blockage) for increasingly smaller quantities of particulate sample collected.

The collection media 70 may therefore be selected based at least in part on its characteristic pore size, such that the particulate sample 81 collected by the collection media contains particles of a desired dimension for subsequent analysis, whilst ensuring that a suitable mass of particulate sample is collected to enable that analysis to be performed.

The particulate sample 81 is collected on a surface of the collection media or collected within at least one pore of the collection media 70. The particulate sample 81 is collected because a characteristic dimension of particles comprised within the particle sample 81 are greater than a characteristic pore size of the collection media 70.

To ensure capture of a sufficient sample volume, assuming the vacuum source is provided by a standard 32mm outer diameter UK vacuum cleaner tubing, the vacuum source has a flowrate of at least 35 litres / minute.

To ensure capture of a sufficient sample volume, the velocity of air flow 80 at inlet 45 of at least 0.1 meters/second, and preferably, 0.8 meters / second.

Following collection of a sample, the collection media 70, now comprising the sample 81, may be removed from the collector 30 and stored. The collector 30 may then be cleaned, if required, before being used to collect a further sample.

Alternatively, a single sample may be collected with a single collector, with a sealing fixture, such as bung or dust cap provided to inlet 45 and exit 50, to seal the collector 30 prior to storing and subsequent analysis.

Analysis of the particulate sample stored on or in the collection media occurs in step 102.

Example analytical techniques include X-ray fluorescence (XRF), X-ray diffraction (XRD), Raman spectroscopy, scanning electron microscope (SEM) analysis, energy dispersive X-ray (EDX) analysis, wet chemistry analysis, particle size distribution (PSD) analysis, inductively coupled plasma mass spectrometry (ICP-MS), transmission electron microscopy (TEM), electron microprobe, isotopic analysis and differential scanning calorimetry (DSC). Differential scanning calorimetry may comprise flash differential scanning calorimetry.

The above analytical techniques determine the physical and chemical composition of the particulate sample.

The repeated performance of method steps 101 and 102, over time and across samples from multiple engines, builds up a mapping of how particulate matter builds up upon the surfaces of the components of a gas turbine engine. This map may characterise at least one of:
- Typical particle size ranges versus location within a gas turbine engine;
- Relative build up rates of particulate within different portions of a gas turbine engine;
- Variations in physical and / or chemical properties of the particulate within different portions of a gas turbine engine;
- The effectiveness of other engine health deterioration mitigation methods such as engine core washing, based upon changes in samples obtained pre and post core-wash; and
- Variation of any of the above, in dependence on the typical operation and / or geographical location of an aircraft comprising gas turbine engines sampled.

Optionally, in step 103, the above information may be analysed to determine the suitability of a material forming the surface of the gas turbine engine component from which a particulate sample is taken.

In these examples, the surface of the gas turbine engine component may be coated or not coated.

If the gas turbine engine component is not coated, the material forming the surface of the gas turbine engine component is the material from which the body of the gas turbine engine component is made. For example, if the gas turbine engine component is a turbine blade, the material is a turbine blade alloy such as an alloy comprising nickel.

If the gas turbine engine component is coated, the material forming the surface of the gas turbine component is the coating applied (a surface coating). For example, the material may be a thermal barrier coating or an environmental barrier coating.

Here, determining the suitability of a material of a gas turbine engine component may include determining whether an existing surface coating applied to the portion of the gas turbine engine component on which particulate has built up provides sufficient protection against the type of particulate that has accumulated - for example, to protect against chemical attack or physical attack, such as erosion, or whether the material should be replaced with a different material.

Determination of suitability may include determining whether the area over which a coating has been applied may be optimised - for example, by expanding the area to be surface coated, if build up is found to be more extensive than anticipated, or reducing the area to be surface coated if build is found to be less extensive than anticipated, or, less damaging than anticipated.

Optionally, different coatings may be selected for different components, or portions of these components, based upon the above mapping of how particulate matter builds up upon the surfaces of the components of a gas turbine engine.

Steps 101, 102 and optionally, 103 may be combined with an analysis of a flight record of the gas turbine engine 10 from which at least one particulate sample is obtained.

The flight record of the gas turbine engine 10 may comprise information of the routes on which the aircraft fitted with the gas turbine engine 10 has been flown, the power settings (for example take-off thrust) that has been used when operating these routes and / or the number of flights that have been flown since a previous particulate sample was made.

In this way, over time, an operator or manufacturer of the gas turbine engine 10 may determine the rate at which particulate matter may build up on a component of the gas turbine engine and/or the physical composition and/or chemical composition of that particulate matter, in dependence upon the routes flown and/or power settings used on that route.

This information may be useful to the manufacturer because it may enable the manufacturer to apply coatings to subsequent gas turbine components that are optimised for the specific environment in which the engine will be used. For example, the gas turbine manufacturer may apply different coatings to gas turbine components that are destined to be used in gas turbine engines that are destined to be used in hot and dusty conditions, relative to other operational theatres.

The information may also enable the manufacturer to modify the gas turbine engine component, so that it is optimised for the specific environment in which the engine will be used.

For example if, after flying certain routes, analysis determines that a characteristic particle size of the collected particulate sample could have a deleterious impact on a gas turbine engine component, the gas turbine engine component may be redesigned in view of this.

For example, it may be determined that when flying on certain routes, a design feature such as a passageway within the component is more susceptible to blockage, as the particulate matter the component is exposed to is larger than typical expectation. In this case, the diameter of the passageway may be increased as a design mitigation for subsequent components.

By way of example, a cooling hole diameter of a new or modified turbine blade design may be determined based in part on a determination of the characteristic diameters of particulate matter that existing turbine blades are exposed to in service. In some cases, this cooling hole diameter may be increased in turbine blades that are to be fitted to gas turbine engines that are to be operated on certain flight routes, where larger diameter particulate matter may be encountered.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A gas turbine engine component surface particulate sampling system (130) comprising:
a particulate sample collector (30);
a borescope comprising a tube (85), wherein the tube (85) of the borescope is connected at its first end (85a) to an inlet (45) of the particulate sample collector, and a particulate sample (81) is obtained at its second end (85b) due to the action of a vacuum source (90) connected to an exit of the particulate sample collector (30), the vacuum source creating at least a partial vacuum within the particulate sample collector (30) such that an airflow (80) and a particulate sample (81) carried by the airflow enter the inlet of the particulate sample collector via the tube (85);
wherein the particulate sample collector comprises a collection media support (60) having a support surface (61) that supports a collection media (70) between the inlet (45) of the particulate sample collector (30) and the exit (50) of the particulate sample collector (30); wherein:
the inlet (45) is comprised within a hollow body (40);
the inlet (45) and exit (50) are fluidically coupled; and
the exit (50) is comprised within the hollow body (40 ) or
the exit (50) is comprised within the collection media support (60);
wherein:
the collection media (70) collects the particulate sample (81a);
the airflow exits the particulate sample collector at the exit (50);
a first seal (41) is provided at a first interface (42) between the hollow body (40) and the collection media support (60); and
a second seal (51) is provided at a second interface (52) between the exit (50) of the particulate sample collector (30) and the vacuum source (90).

2. The system as claimed in claim 1, wherein the support surface (61) is porous or perforated.

3. The system as claimed in claim 1 or 2, wherein the collection media (70) is configured to collect particles having a characteristic particle size greater than 0.2 microns.

4. The system as claimed in any preceding claim, wherein the hollow body (40) comprises a nozzle (44), the inlet (45) located at the tip of the nozzle (44).

5. The system as claimed in any preceding claim wherein the second end (85b) of the tube (85) has a nozzle (86).

6. The system as claimed in claim 5, wherein the nozzle (86) has a scraper surface at its tip and / or the tip of the nozzle is inclined at an angle (86a) relative to a principal axis of the second nozzle.

7. The system as claimed in any preceding claim, wherein the tube (85) is a flexible tube.

8. A method (100) of determining the composition of particulate residue on a surface of a gas turbine engine component, the method comprising:
obtaining a particulate sample from a surface of the gas turbine engine component using the system of any preceding claim; and
analysing the particulate sample to determine the composition of the particulate residue, wherein analysing the particulate sample comprises at least one of: X-ray fluorescence (XRF), X-ray diffraction (XRD), Raman spectroscopy, scanning electron microscope (SEM) analysis, energy dispersive X-ray (EDX) analysis, wet chemistry analysis, particle size distribution (PSD) analysis, inductively coupled plasma mass spectrometry (ICP-MS), transmission electron microscopy (TEM), electron microprobe, isotopic analysis and/or differential scanning calorimetry (DSC).

9. The method as claimed in claim 8, further comprising determining the suitability of a material forming the surface of a gas turbine engine component based upon the analysis of the particulate sample (81).

10. The method as claimed in claim 8, further comprising modifying a design feature of the gas turbine engine based upon the analysis of the particulate sample (81).

## Patentansprüche

1. Partikel-Probenahmesystem (130) für die Oberfläche einer Gasturbinentriebwerkskomponente, umfassend:
einen Partikelprobensammler (30);
ein Boreskop, das ein Rohr (85) umfasst, wobei das Rohr (85) des Boreskops an seinem ersten Ende (85a) mit einem Einlass (45) des Partikelprobensammlers verbunden ist und eine Partikelprobe (81) an seinem zweiten Ende (85b) aufgrund der Wirkung einer Vakuumquelle (90), die mit einem Auslass des Partikelprobensammlers (30) verbunden ist, erlangt wird, wobei die Vakuumquelle mindestens ein Teilvakuum innerhalb des Partikelprobensammlers (30) erzeugt, sodass ein Luftstrom (80) und eine durch den Luftstrom getragene Partikelprobe (81) über das Rohr (85) in den Einlass des Partikelprobensammlers eintreten;
wobei der Partikelprobensammler einen Sammelmedienträger (60) umfasst, der eine Trägeroberfläche (61) aufweist, die ein Sammelmedium (70) zwischen dem Einlass (45) des Partikelprobensammlers (30) und dem Auslass (50) des Partikelprobensammlers (30) trägt; wobei:
der Einlass (45) innerhalb eines Hohlkörpers (40) umfasst ist;
der Einlass (45) und der Auslass (50) fluidisch gekoppelt sind; und
der Auslass (50) innerhalb des Hohlkörpers (40 ) umfasst ist oder
der Auslass (50) innerhalb des Sammelmedienträgers (60) umfasst ist;
wobei:
das Sammelmedium (70) die Partikelprobe (81a) sammelt;
der Luftstrom den Partikelprobensammler am Auslass (50) verlässt;
eine erste Dichtung (41) an einer ersten Schnittstelle (42) zwischen dem Hohlkörper (40) und dem Sammelmedienträger (60) bereitgestellt ist; und
eine zweite Dichtung (51) an einer zweiten Schnittstelle (52) zwischen dem Auslass (50) des Partikelprobensammlers (30) und der Vakuumquelle (90) bereitgestellt ist.

2. System wie in Anspruch 1 beansprucht, wobei die Trägeroberfläche (61) porös oder perforiert ist.

3. System wie in Anspruch 1 oder 2 beansprucht, wobei das Sammelmedium (70) dazu konfiguriert ist, Partikel mit einer charakteristischen Partikelgröße von mehr als 0,2 Mikron zu sammeln.

4. System wie in einem vorhergehenden Anspruch beansprucht, wobei der Hohlkörper (40) eine Düse (44) umfasst, wobei sich der Einlass (45) an der Spitze der Düse (44) befindet.

5. System wie in einem vorhergehenden Anspruch beansprucht, wobei das zweite Ende (85b) des Rohres (85) eine Düse (86) aufweist.

6. System wie in Anspruch 5 beansprucht, wobei die Düse (86) an ihrer Spitze eine Schaberoberfläche aufweist und/oder die Spitze der Düse in einem Winkel (86a) relativ zu einer Hauptachse der zweiten Düse geneigt ist.

7. System wie in einem vorhergehenden Anspruch beansprucht, wobei das Rohr (85) ein flexibles Rohr ist.

8. Verfahren (100) zum Bestimmen der Zusammensetzung eines Partikelrückstands auf einer Oberfläche einer Gasturbinentriebwerkskomponente, wobei das Verfahren Folgendes umfasst:
Erlangen einer Partikelprobe von einer Oberfläche der Gasturbinentriebwerkskomponente unter Verwendung des Systems nach einem vorhergehenden Anspruch; und
Analysieren der Partikelprobe, um die Zusammensetzung des Partikelrückstands zu bestimmen, wobei das Analysieren der Partikelprobe mindestens eines von Folgenden umfasst: Röntgenfluoreszenz (XRF), Röntgenbeugung (XRD), Raman-Spektroskopie, Rasterelektronenmikroskop(REM)-Analyse, energiedispersive Röntgen(EDX)-Analyse, nasschemische Analyse, Partikelgrößenverteilungs(PSD)-Analyse, induktiv gekoppelte Plasmamassenspektrometrie (ICP-MS), Transmissionselektronenmikroskopie (TEM), Elektronenmikrosonde, Isotopenanalyse und/oder Differentialscanningkalorimetrie (DSC).

9. Verfahren wie in Anspruch 8 beansprucht, ferner umfassend Bestimmen der Eignung eines Materials, das die Oberfläche einer Gasturbinentriebwerkskomponente ausbildet, auf Grundlage der Analyse der Partikelprobe (81).

10. Verfahren wie in Anspruch 8 beansprucht, ferner umfassend Modifizieren eines Konstruktionsmerkmals des Gasturbinentriebwerks auf Grundlage der Analyse der Partikelprobe (81).

## Revendications

1. Système d'échantillonnage (130) de particules de surface de composant de moteur à turbine à gaz comprenant :
un collecteur d'échantillon de particules (30) ;
un endoscope comprenant un tube (85), ledit tube (85) de l'endoscope étant relié au niveau de sa première extrémité (85a) à une entrée (45) du collecteur d'échantillon de particules, et un échantillon de particules (81) étant obtenu au niveau de sa seconde extrémité (85b) du fait de l'action d'une source de vide (90) reliée à une sortie du collecteur d'échantillon de particules (30), la source de vide créant au moins un vide partiel à l'intérieur du collecteur d'échantillon de particules (30) de sorte qu'un flux d'air (80) et un échantillon de particules (81) porté par le flux d'air entrent dans l'entrée du collecteur d'échantillon de particules par l'intermédiaire du tube (85) ;
ledit collecteur d'échantillon de particules comprenant un support (60) de milieu de collecte possédant une surface de support (61) qui supporte un milieu de collecte (70) entre l'entrée (45) du collecteur d'échantillon de particules (30) et la sortie (50) du collecteur d'échantillon de particules (30) ;
ladite entrée (45) étant comprise dans un corps creux (40) ;
ladite entrée (45) et ladite sortie (50) étant couplées fluidiquement ; et
ladite sortie (50) étant comprise dans le corps creux (40) ou
ladite sortie (50) étant comprise dans le support (60) de milieu de collecte ;
ledit milieu de collecte (70) collectant l'échantillon de particules (81a) ;
ledit flux d'air sortant du collecteur d'échantillon de particules au niveau de la sortie (50) ;
un premier joint d'étanchéité (41) étant prévu au niveau d'une première interface (42) entre le corps creux (40) et le support (60) de milieu de collecte ; et
un second joint d'étanchéité (51) étant prévu au niveau d'une seconde interface (52) entre la sortie (50) du collecteur d'échantillon de particules (30) et la source de vide (90).

2. Système selon la revendication 1, ladite surface de support (61) étant poreuse ou perforée.

3. Système selon la revendication 1 ou 2, ledit milieu de collecte (70) étant conçu pour collecter des particules possédant une taille de particule caractéristique supérieure à 0,2 microns.

4. Système selon une quelconque revendication précédente, ledit corps creux (40) comprenant une buse (44), ladite entrée (45) étant située au niveau de la pointe de la buse (44).

5. Système selon une quelconque revendication précédente, ladite seconde extrémité (85b) du tube (85) comportant une buse (86).

6. Système selon la revendication 5, ladite buse (86) comportant une surface de raclage au niveau de sa pointe et/ou ladite pointe de la buse étant inclinée à un angle (86a) par rapport à un axe principal de la seconde buse.

7. Système selon une quelconque revendication précédente, ledit tube (85) étant un tube souple.

8. Procédé (100) de détermination de la composition d'un résidu de particules sur une surface d'un composant de moteur à turbine à gaz, le procédé comprenant :
l'obtention d'un échantillon de particules à partir d'une surface du composant de moteur à turbine à gaz à l'aide du système d'une quelconque revendication précédente ; et
l'analyse de l'échantillon de particules pour déterminer la composition du résidu de particules, ladite analyse de l'échantillon de particules comprenant au moins un parmi : la fluorescence de rayons X (XRF), la diffraction des rayons X (XRD), la spectroscopie Raman, l'analyse par microscope électronique à balayage (SEM), l'analyse par rayons X à dispersion d'énergie (EDX), l'analyse par chimie humide, l'analyse de la distribution de taille de particules (PSD), la spectrométrie de masse à plasma à couplage inductif (ICP-MS), la microscopie électronique à transmission (TEM), la microsonde électronique, l'analyse isotopique et/ou la calorimétrie différentielle à balayage (DSC).

9. Procédé selon la revendication 8, comprenant en outre la détermination de l'adéquation d'un matériau formant la surface d'un composant de moteur à turbine à gaz sur la base de l'analyse de l'échantillon de particules (81).

10. Procédé selon la revendication 8, comprenant en outre la modification d'un élément de conception du moteur à turbine à gaz sur la base de l'analyse de l'échantillon de particules (81).
